# EUROPÄISCHE PATENTSCHRIFT

(11) **EP 0 541 980 B1**
(45) Veröffentlichungstag und Bekanntmachung des Hinweises auf die Patenterteilung: **06.05.1999**
(21) Anmeldenummer: 92117566.7
(22) Anmeldetag: 14.10.1992
(51) Int. Cl.: G06F 1/18

(54) **Bedienelemente für eine Rechnereinheit**
Control elements for a computer unit
Eléments de contrôle pour un ordinateur

(30) Priorität: 22.10.1991 DE 9113142 U
(43) Veröffentlichungstag der Anmeldung: 19.05.1993
(73) Patentinhaber: SIEMENS AKTIENGESELLSCHAFT, 80333 München (DE)
(72) Erfinder: Charles, Gérard, W-7500 Karlsruhe 31 (DE); Stripf, Wolfgang, Dr.-Ing., W-7500 Karlsruhe 21 (DE)

(56) Entgegenhaltungen:
- EP-A- 0 353 706
- DE-U- 9 000 568

## Beschreibung

Die Erfindung betrifft eine Rechnereinheit mit einem Bildschirm und mit einer ein erstes und zweites Bedienelement aufweisenden Bedieneinheit, von denen das erste zum Bewegen einer Schreibmarke auf dem Bildschirm vorgesehen ist und das zweite Funktionstasten aufweist, die beim Betätigen die Ausführung von durch ein Programm vorgegebenen Funktionen bewirken.

Zum Bewegen einer Schreibmarke (Cursor) auf dem Bildschirm eines Sichtgerätes wird häufig als Bedieneinheit eine Rollkugel, ein Steuerknüppel oder eine sogenannte "Maus" eingesetzt. Der Cursor wird entsprechend der Bewegung der Bedieneinheit in horizontaler und/oder vertikaler Richtung verschoben. Diese Bedieneinheit wird auch zum Auswählen bzw. Verschieben von mehreren Zeichen oder von ganzen Bildern verwendet, wenn die gesamte darzustellende Information in einem Großbild dargestellt ist, das nicht auf einmal auf dem Bildschirm gezeigt werden kann. Es wird dann nur ein Ausschnitt des Großbildes dargestellt, der mit der Bedieneinheit in beliebiger Richtung über das Großbild verschoben werden kann. Damit Zeichen oder Bilder ausgewählt oder verschoben werden können, ist ein auf einem Rechner, an den die Bedieneinheit und die Anzeigeeinheit angeschlossen sind, ablauffähiges, entsprechendes Programm erforderlich, das durch die Funktionstasten der Bedieneinheit aktiviert wird. Ein Verschiebevorgang eines auf einem Bildschirm dargestellten Bildes wird z. B. dadurch bewirkt, daß zunächst der Cursor mit der Bedieneinheit z. B. an den linken Bildrand bewegt und dann die Bewegung der Bedieneinheit mit einer gedrückten Funktionstaste fortgesetzt wird.

Aus dem Benutzerhandbuch "LOGITECH MAUS" der Firma LOGITECH, 1988 ist eine "Maus" für einen Rechner bekannt, die auf der Unterseite als erstes Bedienelement eine Abtastkugel aufweist, die zum Bewegen des Cursors auf dem Bildschirm dient. Diese Maus ist weiterhin mit einem zweiten Bedienelement in Form von drei Funktionstasten versehen, die beim Betätigen die Ausführung einer durch ein Programm vorgegebenen Funktion bewirken. Dadurch, daß die Funktionstasten und die Abtastkugel mit geringem Abstand in einem Gehäuse eingebaut sind, muß die Maus mit einer Hand bedient werden, wodurch es zu Fehlbedienungen kommen kann.

Aus der europäischen Patentanmeldung 0 353 706 ist ein Steuerpult für Werkzeugmaschinen bekannt, das mit einem Tastenfeld, einem Bildschirm und Bedienelementen für einen Cursor versehen ist, wobei die Bedienelemente als zwei Touchleisten ausgebildet sind.

Der vorliegenden Erfindung liegt die Aufgabe zugrunde, eine Rechnereinheit gemäß dem Oberbegriff des Anspruchs 1 mit einer einfachen Bedieneinheit zu schaffen.

Diese Aufgabe wird durch die im kennzeichnenden Teil des Anspruchs 1 angegebenen Maßnahmen gelöst.

Weitere vorteilhafte Ausgestaltungen der Erfindung ergeben sich aus den Unteransprüchen.

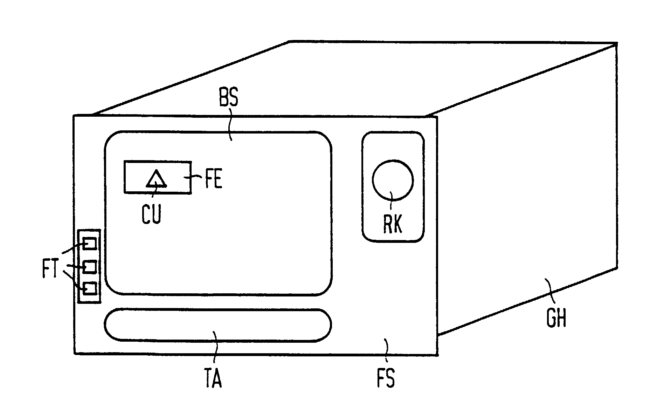

Anhand der Zeichnung, in der ein Ausführungsbeispiel der Erfindung veranschaulicht ist, wird die Erfindung näher verdeutlicht.

Die Figur zeigt eine Rechnereinheit, die in ein Gehäuse GH eingebaut ist. Weitere Bestandteile der Rechnereinheit sind ein Bildschirm BS, eine Tastatur TA, eine aus einer Rollkugel RK und Funktionstasten FT gebildete Bedieneinheit sowie hier nicht dargestellte Funktionseinheiten, wie z. B. eine Prozessorbaugruppe, eine Bildschirmsteuerung und eine Steuereinheit für die Disketten- und Festplattenlaufwerke. Der Bildschirm BS und die Tastatur TA brauchen nicht unbedingt mit den restlichen Bestandteilen der Rechnereinheit in einem Gehäuse eingebaut zu sein. Es ist auch möglich, diese, wie aus dem Siemens-Katalog "SICOMP Industrie PC, IPC 10", Ausgabe Oktober 1990, bekannt, in getrennten Gehäusen einzubauen. Für diesen Fall ist die Bedieneinheit an der Frontseite des Bildschirmgehäuses oder an der Tastaturoberseite angeordnet. Mit der Tastatur TA werden - wie üblich - in den Rechner Daten eingegeben, und mit der Rollkugel RK wird ein Cursor CU auf dem Bildschirm BS bewegt. Vorteilhaft ist die Rollkugel in einer Vertiefung der Frontseite FS des Gehäuses GH angeordnet und ragt daher nicht aus der Frontseite FS heraus, wodurch die Rollkugel nicht versehentlich gedreht werden kann. Dadurch, daß die Funktionstasten FT nicht - wie üblich - unmittelbar neben der Rollkugel RK angeordnet sind, sondern mit ausreichendem Abstand an den gegenüberliegenden Seitenrändern der Frontseite FS, ist eine bequeme Bedienung mit beiden Händen möglich. Der Anwender kann im vorliegenden Beispiel mit der rechten Hand die Rollkugel und somit den Cursor CU z. B. auf ein auf dem Bildschirm BS markiertes Feld FE positionieren, das eine sogenannte IKONE eines auf der Festplatte der Rechnereinheit gespeicherten Anwenderprogramms ist. Dieses Anwenderprogramm wird nun dadurch von der Festplatte in den Hauptspeicher übertragen und dann gestartet, indem mit der linken Hand eine der Funktionstasten FT gedrückt wird. Welche Funktionstaste gedrückt werden muß, um das Anwenderprogramm zu aktivieren, ist durch ein entsprechendes Programm für die grafische Bedieneroberfläche vorgegeben. Ein solches Programm ist z. B. aus der Beschreibung "GEM Desktop" für SICOMP PC und SIMATIC S5, Ausgabe 1986, bekannt. Wären die Funktionstasten FT wie beim Stand der Technik an der Rollkugel RK angeordnet, so könnte es vorkommen, daß nach der Positionierung, aber kurz vor dem Betätigen der Funktionstaste FT die Hand des Bedieners die Rollkugel RK berührt und der Cursor sich über das markierte Feld hinaus bewegen würde. Dadurch könnte das gewünschte Anwenderprogramm nicht aktiviert werden und der Auswahlvorgang müßte wiederholt werden.

## Patentansprüche

1. Rechnereinheit mit einem Bildschirm (BS), einer Tastatur und mit einer ein erstes und ein zweites Bedienelement (RK, FT) aufweisenden Bedieneinheit, von denen das erste (RK) zum Bewegen einer Schreibmarke (CU) auf dem Bildschirm (BS) vorgesehen ist und das zweite Funktionstasten (FT) aufweist, die beim Betätigen die Ausführung von durch ein Programm vorgegebenen Funktionen bewirken, dadurch gekennzeichnet, daß das erste Bedienelement eine Rollkugel (RK) ist, die von dem zweiten Bedienelement (FT) in einem derart großen Abstand angeordnet ist, daß die Rollkugel und die Funktiontasten mit je einer Hand gleichzeitig bedient werden können.

2. Rechnereinheit nach Anspruch 1, dadurch gekennzeichnet, daß die Rollkugel (RK) und das zweite Bedienelement (FT) an der Frontseite (FS) des Gehäuses (GH) der Rechnereinheit oder des Bildschirmgehäuses oder an der Tastaturoberseite angeordnet sind.

3. Rechnereinheit nach Anspruch 2, dadurch gekennzeichnet, daß die Rollkugel (RK) und das zweite Bedienelement (FT) an den gegenüberliegenden Rändern der Frontseite (FS) angeordnet sind.

4. Rechnereinheit nach einem der Ansprüche 1 bis 3, dadurch gekennzeichnet, daß die Rollkugel (RK) in einer Vertiefung der Frontseite (FS) des Gehäuses (GH) angeordnet ist, derart, daß die Rollkugel (RK) nicht aus der Frontseite (FS) herausragt.

## Claims

1. Computer unit having a screen (BS), a keyboard, and having an operating unit which has a first and a second operating element (RK, FT), the first (RK) of which is provided in order to move a cursor (CU) on the screen (BS) and the second has function keys (FT) which, upon actuation, effect the execution of functions which are specified by a program, characterised in that the first operating element is a control ball (RK), which is arranged at such a large distance from the second operating element (FT) that the control ball and the function keys can be operated simultaneously, using one hand in each case.

2. Computer unit according to claim 1, characterised in that the control ball (RK) and the second operating element (FT) are arranged on the front side (FS) of the housing (GH) of the computer unit or of the screen housing, or on the upper side of the keyboard.

3. Computer unit according to claim 2, characterised in that the control ball (RK) and the second operating element (FT) are arranged on opposing edges of the front side (FS).

4. Computer unit according to one of the claims 1 to 3, characterised in that the control ball (RK) is arranged in a hollow on the front side (FS) of the housing (GH), in such a way that the control ball (RK) does not protrude from the front side (FS).

## Revendications

1. Ordinateur comprenant un écran (BS), un clavier (TA) et une unité de contrôle comportant un premier et un deuxième élément de contrôle (RK, FT), le premier élément de contrôle (RK) étant prévu pour déplacer un curseur (CU) sur l'écran (BS) et le deuxième élément de contrôle comportant des touches de fonctions (FT) qui provoquent, lors de leur actionnement, l'exécution de fonctions prescrites par un programme, caractérisé par le fait que le premier élément de contrôle est une boule roulante (RK) qui est disposée à une si grande distance du deuxième élément de contrôle (FT) que la boule roulante et l'ensemble des touches de fonctions peuvent être manipulés en même temps de chaque main.

2. Ordinateur selon la revendication 1, caractérisé par le fait que la boule roulante (RK) et le deuxième élément de contrôle (FT) sont disposés sur la face avant (FS) du boîtier (GH) de l'ordinateur ou du boîtier de l'écran ou sur le dessus du clavier.

3. Ordinateur selon la revendication 2, caractérisé par le fait que la boule roulante (RK) et le deuxième élément de contrôle (FT) sont disposés sur les bords opposés de la face avant (FS).

4. Ordinateur selon l'une des revendications 1 à 3, caractérisé par le fait que la boule roulante (RK) est disposée dans une cavité de la face avant (FS) du boîtier (GH) de telle sorte que la boule roulante (RK) ne dépasse pas de la face avant (FS).
